# EUROPEAN PATENT SPECIFICATION

(11) **EP 4 147 953 B1**
(45) Date of publication and mention of the grant of the patent: **12.06.2024**
(21) Application number: 21382827.0
(22) Date of filing: 14.09.2021
(51) Int. Cl.: B62H 3/12, B62H 3/04, B62H 3/08

(54) **LIFTING DEVICE FOR A BICYCLE HANDLING SYSTEM AND CORRESPONDING HANDLING SYSTEM**
HEBEVORRICHTUNG FÜR EIN FAHRRADHANDHABUNGSSYSTEM UND ZUGEHÖRIGES HANDHABUNGSSYSTEM
DISPOSITIF DE LEVAGE POUR UN SYSTÈME DE GESTION DE BICYCLETTE ET SYSTÈME DE GESTION CORRESPONDANT

(43) Date of publication of application: 15.03.2023
(73) Proprietor: Ignasi Clotet, S.L.U., 25230 Mollerusa (ES)
(72) Inventor: Caba Muntada, Joan, 25230 Mollerussa (ES); Sala Lanau, Ferran, 25230 Mollerussa (ES)
(74) Representative: Curell Suñol S.L.P.

(56) References cited:
- DE-A1- 4 209 007
- DE-A1- 10 032 594
- JP-U- S5 864 587
- US-A- 5 183 162

## Description

### Field of the invention

The invention relates to a lifting device for a bicycle handling system, for moving a bicycle between a delivery level and a handling level, elevated relative to said delivery level, according to claim 1.

The invention further relates to a bicycle handling system including a lifting device according to the invention.

### State of the art

In the recent years due to environmental reasons and for sake of sustainability two wheeled transport such as with bicycles has become more and more popular in the world and has experienced an exponential growth. Both conventional bicycles as well as scooters, but also their electrified versions are more and more used in the cities as an alternative to private cars or public transport.

To cover these needs many cities have invested in public collective bicycle or scooter sharing services, allowing users to use a public bicycle against a monthly fee. This provides for users not having to own a bicycle which is an important advantage. However, these systems are not always reliable in terms of availability of bicycles. Therefore, although these collective services have been a relevant great success, many riders of middle to large size cities opt for owing and riding their own bicycle or scooter. This is an advantage in terms of flexibility for the rider. Furthermore, owning an own vehicle has the advantage the user does not have to ride a vehicle which often is not in perfect mechanical conditions.

Furthermore, this social change for sustainability has even been accelerated and increased during this year 2020 due to the Covid pandemic. In middle to large size cities many people want to avoid public transportation to not to be obliged to travel in closed spaces with a relevant amount of people.

In any case, middle and large size cities were not ready for this great increase of private two wheeled transportation and thus there is a need for two wheeled vehicle handling capacity, in particular storage systems allowing the bicycles to be securely stored. Furthermore, most of the cities have space problems in the city centre, i.e. there is not much construction space for creating new storing facilities.

Therefore, there is a need bicycle handling systems that have the less impact possible in terms of street space occupied. This has led to elevated bicycle handling systems to be more and more popular since they do not significantly occupy street space.

Also at a private level, there is also the need for storing bicycles in a convenient and simple manner.

Also, with the increase of the use of bicycles, the bicycle producers also require for an improved handling capacity for their production sites. Due to ergonomic reason, often the bicycles are held hanging by a wheel from a guiding rail. Lifting the bicycles to this transportation rail at a handling level can lead to injuries among the operators.

Document KR100928165B1 discloses a bicycle parking device allowing children, female, old or weak people to park a bicycle easily by lifting a parking stand with a small force. This system is bulky since the bicycle is parked in horizontal position and is thus not convenient for use in public spaces.

Document WO2018104800A1 discloses a bicycle parking device for fixing and holding a bicycle in vertical position. This device is very much wheel size dependent.

Document DE10032594A1, which shows the preamble of claim 1, discloses a bicycle park having a holder to take the front wheel with a security locking belt, to be moved at a carrier to bring the bicycle into a secure position against theft.

### Summary of the invention

It is an object of the invention to propose a lifting device for a bicycle handling system, for moving a bicycle between a delivery level and a handling level, elevated relative to said delivery level, which is flexible and allows handling bicycles of different wheel sizes. This purpose is achieved by a lifting device for moving a bicycle of the type indicated at the beginning, characterized in claim 1.

In the context of the invention, a handling system according to the invention can be among others, an elevated bicycle production line, an elevated bicycle storing system, or an elevated parking place for bicycles, all these systems being elevated relative to a delivery level.

This lifting device provides for flexibility regarding the size of bicycles to handle since the device is not wheel-size dependent. Both adult bicycles, as well as children's bicycles can be handled, such as to store or deliver them at an elevated handling level without trouble. When delivering the bicycle, the wheel is inserted in the wheel holder, such that the tread of the first wheel lies on the wheel holder, and the wheel holder is located under the first wheel, that is the first wheel is placed on the wheel holder no matter which diameter it has.

Then when wheel holder starts moving from the delivery level to the handling level, the wheel holder during the movement is led to rotate from the delivery position towards the handling position. Thanks to this, the bicycle when reaching the handling level is held hanging vertically from the wheel holder. By doing this the centre of the wheel holder is aligned with the rotation axis of the first wheel and eventually the centre of mass of the bicycle, independently of the wheel size.

On the other hand, it must be pointed out that in the invention the expression *lifting device* is used for sake of simplicity. However, the lifting device works both for lifting the bicycle from the delivery level to the handling level of the bicycle handling system, but also for lowering or descending the bicycle from the handling level to the delivery level.

It must also be pointed out, that preferably the first wheel is the front wheel, because it is more practical to deliver and withdraw the bicycle from the lifting device.

The invention further includes several preferred features that are object of the dependent claims and the utility of which will be highlighted hereinafter in the detailed description of an embodiment of the invention.

To provide a simpler a faster handling and reduce the place required, said lifting rail is straight and is arranged in upright position.

In another embodiment seeking to solve the problem of protecting the wheel, said wheel holder comprises a clamp with an opening, said first wheel comprising a tyre and a rim, and in that said clamp is configured to hold said first wheel by said tyre and/or said rim.

Also, to facilitate the wheel holder to hold the wheel in said delivery position said opening of said clamp is facing vertically upwards, while in said lifting position said opening of said clamp is facing vertically downwards.

In the invention said lifting rail and said wheel holder comprise a first rotation device and a second rotation device, said first rotation device being located close to delivery level and remote to said handling level, and said second rotation device being located close to said handling level and remote to said delivery level, such that when said wheel holder is moved between said delivery level and said handling level, said first rotation device causes a first rotation of said wheel holder relative to said lifting rail between said delivery position and an intermediate position and said second rotation device causes a second rotation of said wheel holder relative to said lifting rail between said intermediate position and said lifting position.

In further embodiment, in order to reduce the number of motors required to drive the lifting device, said first and second rotation devices comprise a rotation cam and a rotation lever, said rotation cam and said rotation lever being functionally associated to said lifting rail and said wheel holder to cause said first and said second rotation of said wheel holder relative to said lifting rail during the movement of said wheel holder between said delivery level and said handling level. These rotation devices avoid the need of a motor dedicated to the rotation of the wheel holder in a synchronized manner with the movement of the wheel holder along the longitudinal direction of the lifting rail.

Also, to improve the guiding of the bicycle during the movement to the handling level and back, said wheel holder further comprises at a tread supporting section a self-centering device for centering the first wheel in said wheel holder in a centered manner. The expression receiving the wheel in centered manner in the tread section indicates that once the wheel is received in the tread supporting section and the wheel adopts a wheel resting position in case the wheel is forced to slightly move forwards or backwards, it returns to the center of the tread supporting section on its own to the resting position. Therefore, to withdraw the wheel from the tread supporting section, the wheel must overcome the limits of the tread supporting section. Thanks to this arrangement, the wheel is always centered relative to a line which is common to all sizes of wheels, that is, the vertical line passing through the wheel center and the tyre supporting point of the wheel. This alignment is common to any wheel size. In other words, the wheel holder of the invention provides a universal holding system for all wheel sizes.

Preferably, to obtain an easy centering of the wheel relative to the wheel holder, said self-centering device comprises two centering wheels having a decreasing diameter towards their central symmetry plane, said centering wheels being distanced from one another relative to said clamp such that in use, the first wheel is self-centered relative to the clamp of said wheel holder.

In a preferred embodiment said two centering wheels are identical and symmetrically arranged relative to said clamp. Furthermore, it is preferred that the centering wheels are configured as idler wheels, freely rotatable about their own axis.

To simplify the manufacture of the device, said two wheels are made from a first and a second frustroconical wheels facing each other by the smaller diameter thereof. However, said first and second wheels can have the shape of any revolution frustum, as long as the generating curve of the frustum converges from the outer diameter to the inner diameter.

Preferably, said centering wheels are made as a single part, and even more preferably said self-centering wheels are hourglass shaped, that is their outer diameter constantly decreases towards the central plane of the wheel.

In another embodiment seeking to avoid that the bicycle swings during its displacement along the lifting rail when hanging by the first wheel, the lifting device comprises a first guiding rail arranged facing said wheel holder such that in use, said first guiding rail receives and guides the second wheel opposite to the first wheel held by said wheel holder during the movement of said bicycle along said lifting rail. As already explained once the bicycle is hanging it tends to align itself along the vertical line passing through the centre of the first wheel and the centre of mass. By providing this first guiding rail the bicycle has a supporting surface for the second wheel avoiding undesired back and forth swinging around the first wheel rotation axis or side movements when the first wheel is the front wheel of the bicycle.

In a preferred embodiment seeking to avoid the rear mudguard to contact the ground during the lifting of the bicycle, said first guiding rail comprises an upper main section and a lower tilting end section, said tilting end section being tiltable about a tilting axis, relative to said main section between an aligned position in which said tilting end section is aligned with said main section of said first guiding rail and an angled position in which said tilting end section is angled relative to said main section of said first guiding rail towards said wheel holder, said tilting end section being functionally associated with said wheel holder to go from the aligned position to the angled position once said wheel holder moving towards said handling level overcomes said tilting axis.

In another embodiment said main section of said first guiding rail is parallel to said lifting rail.

In another embodiment seeking to help the user to correctly place the bicycle in the wheel holder the lifting device further comprises a second guiding rail for receiving at least said first wheel, said second guiding rail having a first and a second end, and said second guiding rail being aligned with said wheel holder and having said second end arranged adjacent to said wheel holder for guiding the first wheel into said wheel holder.

Also, to reduce the installation work of the lifting device and making the placement of the bicycle more intuitive said second guiding rail is inclined upwards towards the wheel holder.

Finally, the invention refers to an elevated bicycle handling system for elevated handling of a bicycle, comprising a delivery area arranged at a delivery level and an elevated handling area arranged at a handling level. The handling system comprises a lifting device according to the invention.

Preferably, the handling system of the invention is an elevated bicycle storage system.

Likewise, the invention also includes other features of detail illustrated in the detailed description of an embodiment of the invention and in the accompanying figures.

### Brief description of the drawings

Further advantages and features of the invention will become apparent from the following description, in which, without any limiting character, preferred embodiments of the invention are disclosed, with reference to the accompanying drawings in which:
Figure 1 is a perspective view of the lifting device according to the invention.
Figure 2A to 2D show a detailed views of the lifting device of Figure 1.
Figure 3 shows a detailed perspective view of the wheel holder of the lifting device of Figure 1.
Figures 4A to 4I show front views of the lifting device according to the invention during the handling process of a bicycle, while Figure 4J shows a side view thereof.
Figures 5A to 5I show the different rotation positions of the wheel holder relative to the lifting rail of lifting device according to the invention during the handling of a bicycle.
Figure 6 is a schematical view of a handling system, and more particularly of a parking system including the lifting device of the invention.

### Detailed description of embodiments of the invention

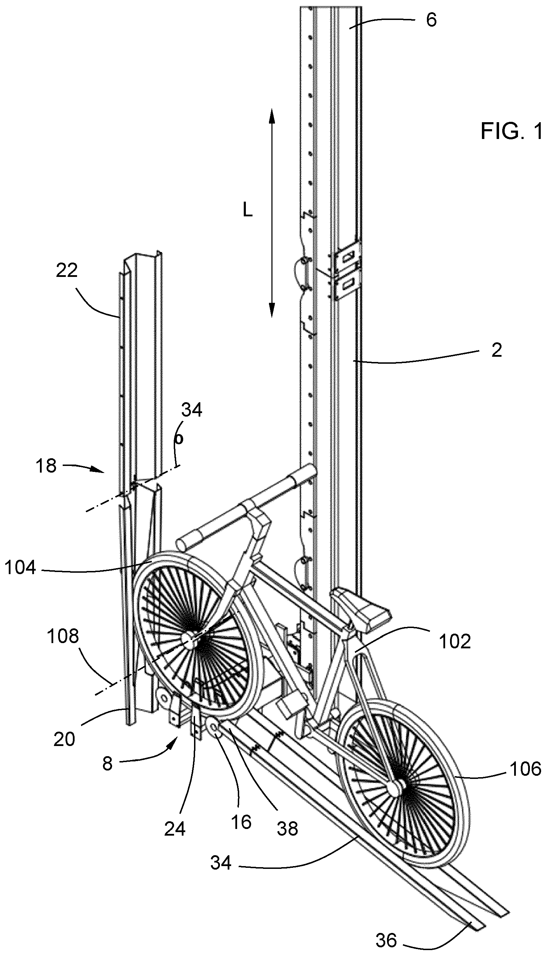

Figures 1 to 5 show a lifting device 1 for a bicycle handling system 100 according to the invention. The lifting device 1 is conceived for moving a bicycle 102 between a delivery level 4 and a handling level 6. As it is apparent from the figures, this later handling level 6 is elevated relative to the delivery level 4.

The delivery level 4 corresponds in a broad sense to the level where the user delivers or withdraws the bicycle 102, while the handling level 6 corresponds to the level where the bicycle 102 is transported to for handling. The concept of handling according to the invention refers to any action required after the bicycle has been lifted to the handling level.

The lifting device 1 can thus be coupled to a handling system such as an elevated parking for bicycles, but it can also be used on its own for storing one single bicycle or associated to a bicycle production line.

In its most general form, the lifting device 1 according to the invention comprises a lifting rail 2, and a wheel holder 8 for holding a first wheel 104 of the bicycle 102.

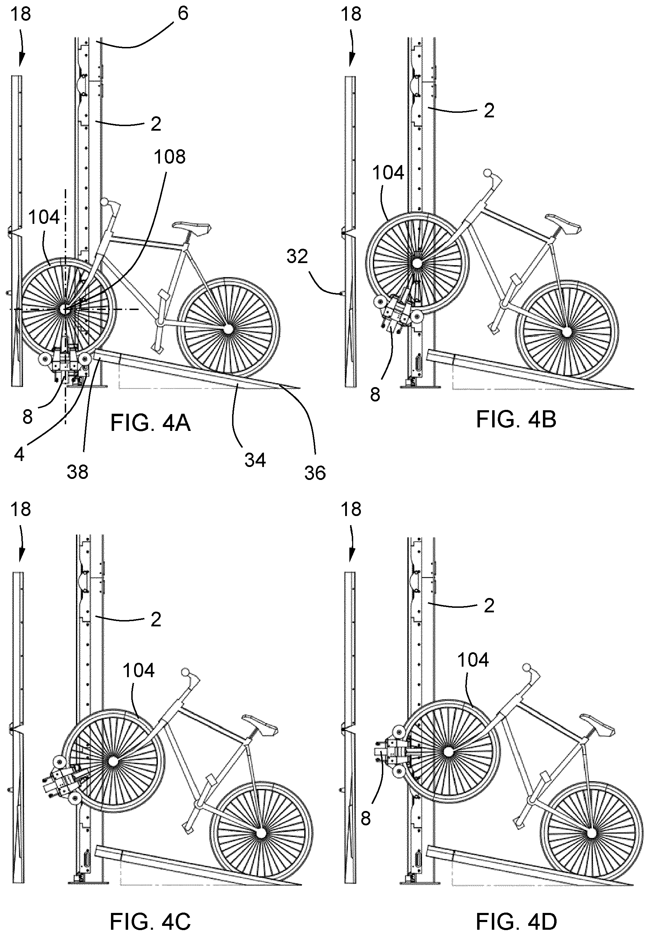

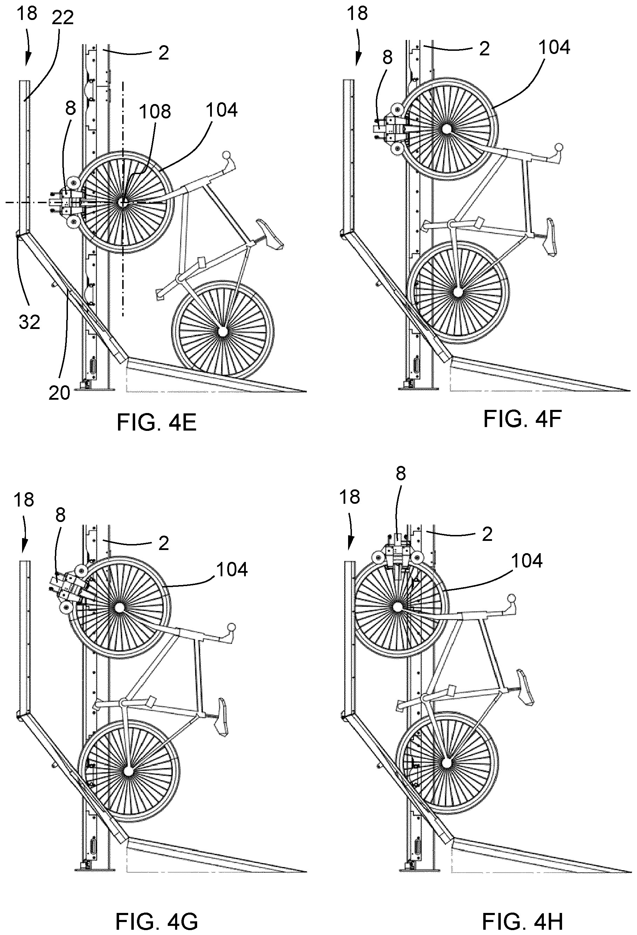

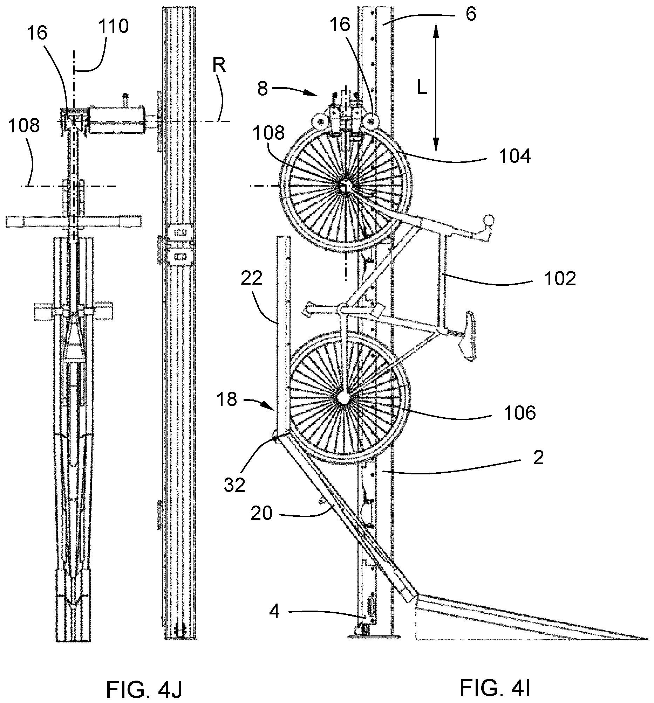

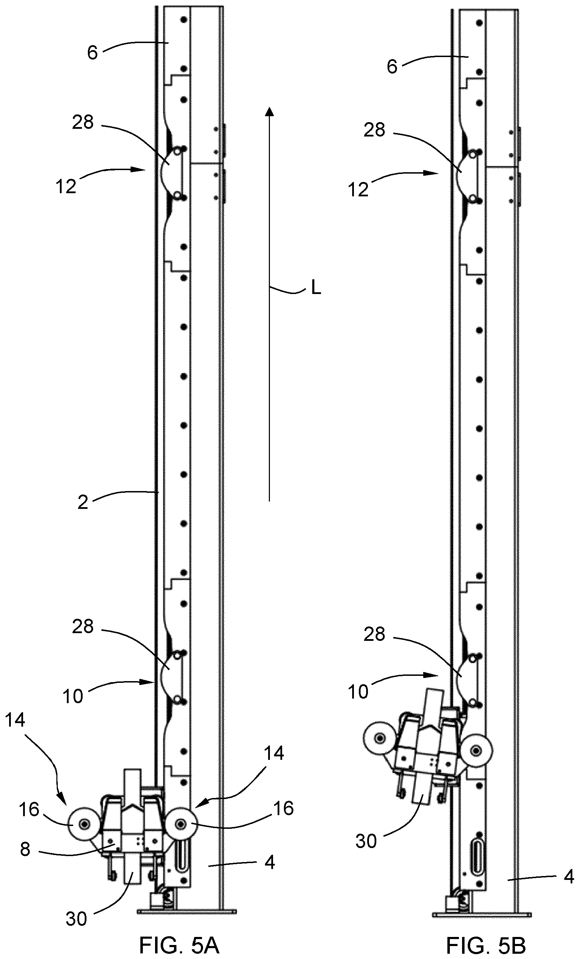

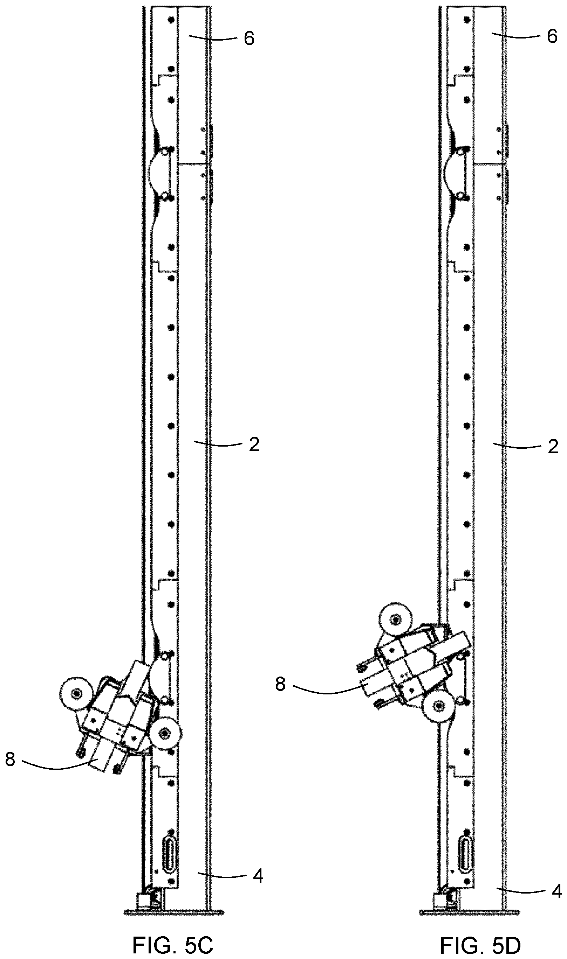

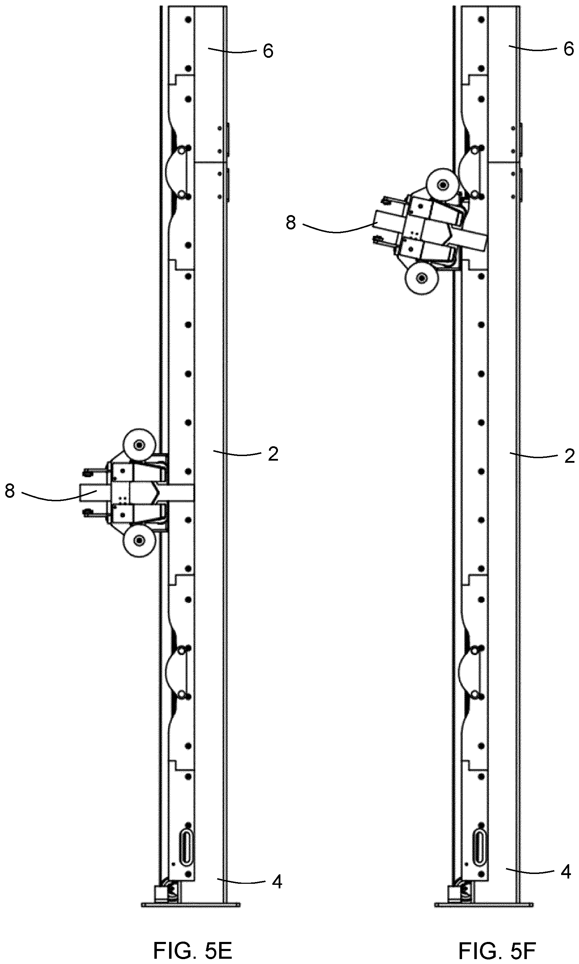

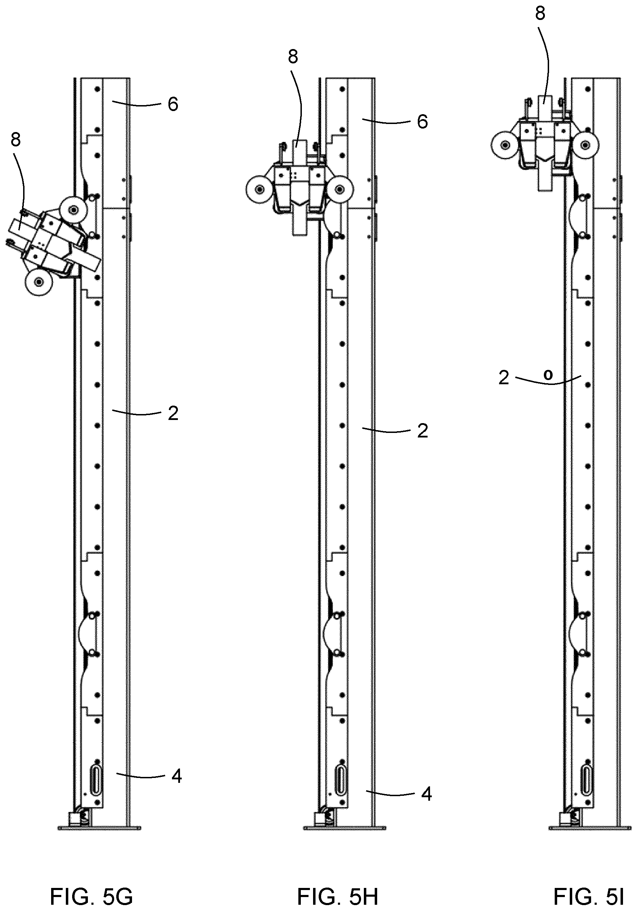

As it is apparent from Figures 4I or 5A, the lifting rail 2 extends longitudinally between the delivery level 4 and the handling level 6 and it thus defines a lifting direction L. Also, in this embodiment the lifting rail 2 is straight and is arranged in upright position. However, this is upright arrangement not essential for the bicycle 102 to reach the handling level 6.

The lifting device 1 further comprises a wheel holder 8 for holding a first wheel 104 of the bicycle 102.

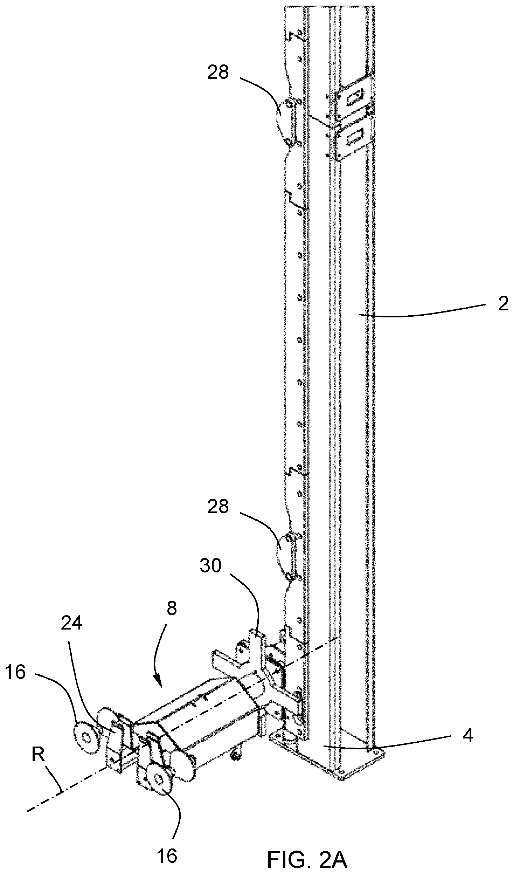

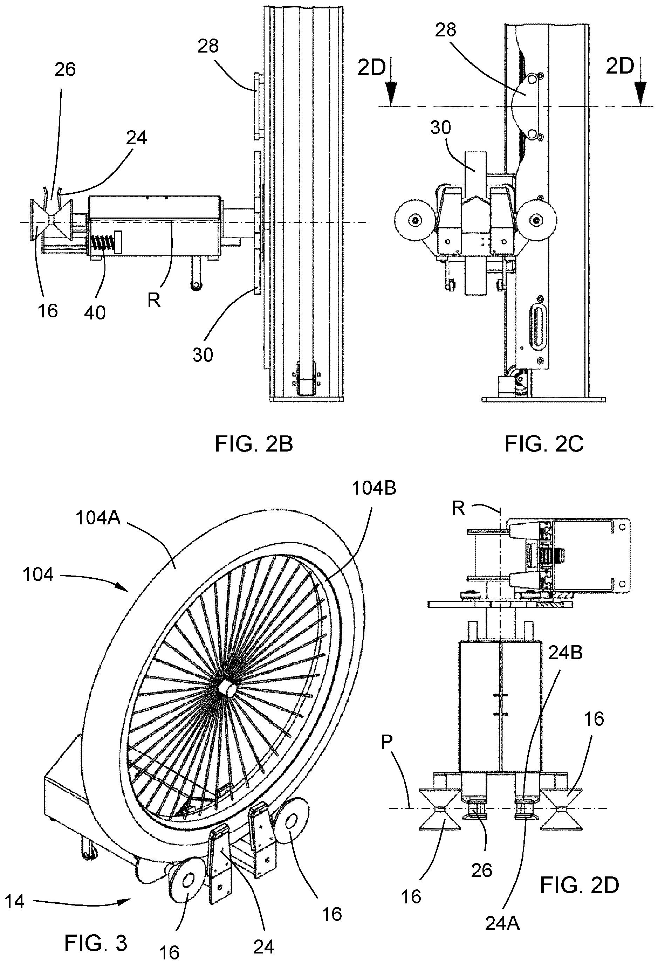

Figures 2A to 3 show the wheel holder 8 of this embodiment in further detail. The wheel holder 8 of this embodiment comprises a clamp 24 with an opening 26. The first wheel 104 comprises a tyre 104A and a rim 104B.

Preferably, the clamp 24 is configured to hold the first wheel 104 by the tyre 104A to not damage the rim 104B. However, it can also hold the tyre 104A and/or the rim 104B. The clamp 24 is dimensioned to exert the holding compression force primarily on the tyre. However different situation may arise in this process. For example, the tyre might be as wide as the rim. Then it can happen that the clamp 24 holds the first wheel 104 by the tyre and the rim simultaneously. Alternatively, the tyre 104A can have a flat, such that when the holding force is exerted, then the clamp 24 holds the rim 104B only.

Preferably, the wheel holder 8 for holding the first wheel 104 of the bicycle 102 comprises a clamp 24 and a tread supporting section, as it is apparent from Figures 2A to 3. The tread supporting section comprises a self-centering device 14 for receiving the first wheel 104 in the wheel holder 8 in a centered manner. The clamp 24 comprises, a first and a second arms 24A, 24B protruding relative to the tread supporting section. The second arm 24B is arranged facing the first arm 24A, symmetrically to a longitudinal central symmetry plane P (see Figure 2D).

The first and second arms 24A, 24B define the opening 26 for receiving first wheel 104 of the bicycle 102 lengthwise. The clamp 24 further comprises an elastic member 40, shown schematically in Figure 2B only, for illustrative purposes.

The first and second arms 24A, 24B are movable relative to each other between an open position, in which the first and second arms are distanced from each other for allowing the insertion or extraction of the first wheel 104 between the first and second arms 24A, 24B and a closed position, in which said first and second arms 24A, 24B are close to each other for holding the side walls of the tyre 104A inserted between the first and second arms 24A, 24B.

The elastic member 40 is functionally associated with the first and second arms, to exert a force causing said first and second arms 24A, 24B to adopt at rest said closed position.

In the invention, the first arm 24A is movable, while the second arm 24B is static. However, alternatively both the first and second arms can move from the open to the closed position.

Figures 4A to 5I show how the wheel holder 8 is movably mounted on the lifting rail 2 along the lifting direction L between the delivery level 4 and the handling level 6.

The wheel holder 8 is further rotatably mounted relative to the lifting rail 2 about a rotation axis R, shown in Figures 2B and 2D. This rotation axis R is perpendicular to the lifting direction L. Therefore, the wheel holder 8 can rotate between a delivery position in which the wheel holder 8 is facing upwards at the delivery level 4 for receiving first wheel 104, shown in Figures 4A or 5A, and a lifting position in which the wheel holder 8 is facing downwards at the handling level 6, as shown in Figures 4I, 4J and 5I. More particularly in this case, in the delivery position the opening 26 of the clamp 24 is facing vertically upwards, while in the lifting position said opening 26 of said clamp 24 is facing vertically downwards.

To solve the problem of providing a lifting device for a bicycle handling system, for moving a bicycle between the delivery level 4 and a handling level 6, which is flexible and allows handling bicycles of different wheel sizes the movement of the wheel holder 8 along the lifting direction L and the rotation of the wheel holder 8 are functionally associated to one another to cause the rotation of the wheel holder 8 between the delivery and lifting positions during the movement of the wheel holder 8 between the delivery and handling levels 4, 6. The progression of this whole lifting procedure can be seen in Figures 4A to 5I.

This rotation of the wheel holder 8 relative to the lifting rail can be achieved for example by dedicated motors. However, in the invention, the lifting rail 2 and the wheel holder 8 comprise a first rotation device 10 and a second rotation device 12.

As it is apparent from Figure 5A, the first rotation device 10 is located close to delivery level 4 and remote to the handling level 6. On the other hand, the second rotation device is located close to the handling level 6 and remote to the delivery level 4. Then when the wheel holder 8 is moved between the delivery level 4 and the handling level 4, the first rotation device 10 causes a first rotation of the wheel holder 8 relative to the lifting rail 2 between said delivery position of Figure 4A and an intermediate position of Figure 4D. At its turn, the second rotation device 12 causes a second rotation of said wheel holder 8 relative to the lifting rail 2 between the intermediate position of Figure 4D and said lifting position of Figure 4I.

In this embodiment, these first and second rotation devices 12 comprise a rotation cam 28 and a rotation lever 30, the rotation cam 28 and the rotation lever 30 being functionally associated to said lifting rail 2 and the wheel holder 8 to cause the first and said second rotation of the wheel holder 8 relative to the lifting rail 2 during the movement of the wheel holder 8 between the delivery and handling levels 4, 6. Figure 2B shows how the rotation cam 28 protrudes from the lifting rail 2, such that the rotation lever 30 can collide against the cam 28. To have a simple construction, preferably said first and second rotation amount to an angle of 90°.

Further, it is convenient that the bicycle 102 is centred as much as possible relative to the lifting device 1. To this end, and as previously explained the wheel holder 8 further comprises a self-centering device 14 for centering the first wheel 104 in the wheel holder 8. As it is apparent from Figure 4J, the central plane 110 of the first wheel 104 of the bicycle 102 is also centred relative to the wheel holder 8, that is the part of the wheel holder 8 holding the first wheel 104.

Figure 2D, shows that in this embodiment the self-centering device 14 comprises two centering wheels 16, one to the right and the other one to the left of the clamp 24. These two centering wheels 16 are identical and symmetrically arranged relative to said clamp 24.

Figures 2B and 2D show that the centering wheels 16 have a decreasing diameter towards their central symmetry plane P. Furthermore, the centering wheels 16 are distanced from one another relative to said clamp 24 such that in use, the first wheel 104 is self-centered relative to the clamp 24 of the wheel holder 8.

Figures 4A to 4I show that the lifting device 1 preferably comprises a first guiding rail 18 arranged facing the wheel holder 8. Figure 4J shows that the first guiding rail 18 is aligned with the holding part of the wheel holder 8, as it is apparent from the central plane 110 of the first wheel 104. Thanks to this aligned arrangement in use, the first guiding rail 18 receives and guides the second wheel 106 opposite to the first wheel 104 held by said wheel holder 8 during the movement of the bicycle 102 along the lifting rail 2. As already explained once the bicycle 102 is hanging it tends to align itself along the vertical line passing through the first wheel rotation axis 108 of the first wheel and the centre of mass of the bicycle. By providing this first guiding rail 18 the bicycle 102 has a supporting surface for the second wheel 106 avoiding undesired back and forth swinging around the first wheel rotation axis 108 or side movements when the first wheel 104 is the front wheel of the bicycle.

To avoid that mudguard of the bicycle 102 eventually touches the ground when the bicycle is lifter the first guiding rail 18 comprises an upper main section 22 and a lower tilting end section 20. In this case, the main section of the first guiding rail 18 is parallel to the lifting rail 2.

The tilting end section 20 is tiltable about a tilting axis 32 (See Figure 4I), relative to the main section 22 between an aligned position in which the tilting end section 20 is aligned with the main section 22 of the first guiding rail 18 and an angled position in which the tilting end section 20 is angled relative to said main section 22 of the first guiding rail 18 towards said wheel holder 8. Then the tilting end section 20 is functionally associated with the wheel holder 8 to go from the aligned position of Figure 4A to the angled position of Figure 4E once the wheel holder 8 moving towards the handling level 6 overcomes the tilting axis 32.

Finally, to facilitate the delivery of the bicycle 102 in the correct position, the lifting device 1 it further comprises a second guiding rail 34 for receiving at least said first wheel 104. This second guiding rail 34 has a first and a second ends 36, 38. As it is apparent from Figures 1 or 4A, the second guiding rail 34 is aligned with the wheel holder 8 and has the second end 38 arranged adjacent to the wheel holder 8 for guiding the first wheel 104 into the wheel holder 8.. In this case, indeed, the second guiding rail 34 is long enough to receive the first and the second wheels 104, 106.

Furthermore, the delivery comfort is improved when the second guiding rail 34 is inclined upwards towards the wheel holder 8.

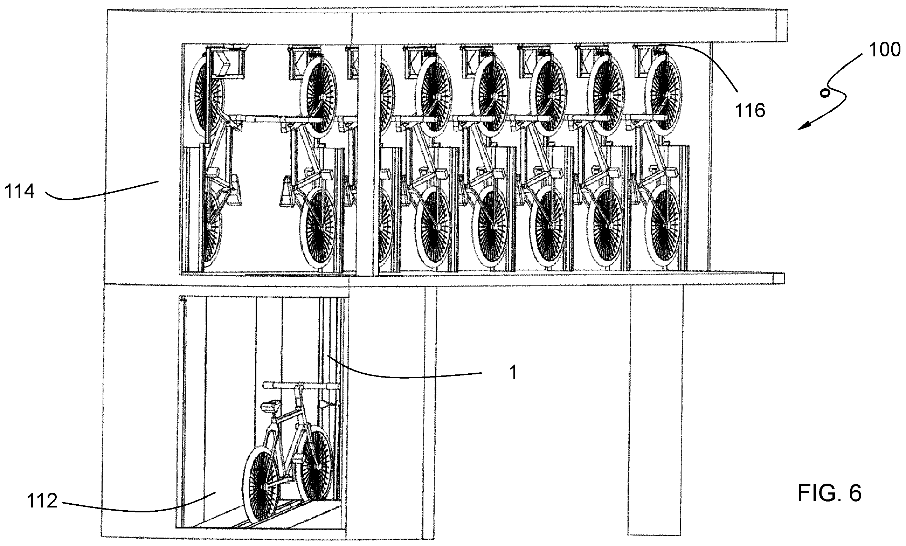

Finally, figure 6 shows an elevated bicycle handling system 100 for public areas in the sense of the invention.

The system comprises a delivery area 112 arranged at a delivery level 4 and an elevated handling area 114 arranged at a handling level 6.

In this case the handling area 114 consist in a closed cabinet containing a carrousel device 116 not shown in detail for storing a plurality of bicycles. The system 100 comprises a lifting device 1 according to the description of the previous paragraphs.

## Claims

1. Lifting device (1) for a bicycle handling system, for moving a bicycle (102) between a delivery level (4) and a handling level (6), elevated relative to said delivery level (4), said lifting device (1) comprising:
[a] a lifting rail (2) extending longitudinally between
[i] said delivery level (4) and
[ii] said handling level (6),
[b] said lifting rail (2) defining a lifting direction (L),
[c] the lifting device (1) further comprising a wheel holder (8) for holding a first wheel (104) of said bicycle (102),
[d] said wheel holder (8) being movably mounted on said lifting rail (2) along said lifting direction (L) between
[i] said delivery level (4) and
[ii] said handling level (6),
[e] said wheel holder (8) is further rotatably mounted relative to said lifting rail (2) about a rotation axis (R) perpendicular to said lifting direction (L), between
[i] a delivery position in which said wheel holder (8) is facing upwards at said delivery level (4) for receiving said first wheel (104), and
[ii] a lifting position in which said wheel holder (8) is facing downwards at said handling level (6), and
[f] the movement of said wheel holder (8) along said lifting direction (L) and the rotation of said wheel holder (8) are functionally associated to one another to cause the rotation of said wheel holder (8) between said delivery and lifting positions during the movement of said wheel holder (8) between said delivery and handling levels (4, 6), **characterized in that**
[g] said lifting rail (2) and said wheel holder (8) comprise a first rotation device (10) and a second rotation device (12), said first rotation device (10) being located close to delivery level (4) and remote to said handling level (6), and said second rotation device (12) being located close to said handling level (6) and remote to said delivery level (4), such that when said wheel holder (8) is moved between said delivery level (4) and said handling level (4), said first rotation device (10) causes a first rotation of said wheel holder (8) relative to said lifting rail (2) between said delivery position and an intermediate position and said second rotation device (12) causes a second rotation of said wheel holder (8) relative to said lifting rail (2) between said intermediate position and said lifting position.

2. The lifting device (1) according to claim 1, **characterized in that** said lifting rail (2) is straight and is arranged in upright position.

3. The lifting device (1) according to claim 1 or 2, **characterized in that** said wheel holder (8) comprises a clamp (24) with an opening (26), said first wheel (104) comprising a tyre and a rim, and **in that** said clamp (24) is configured to hold said first wheel (104) by said tyre (104A) and/or said rim (104B).

4. The lifting device (1) according to claim 3, **characterized in that** in said delivery position said opening (26) of said clamp (24) is facing vertically upwards, while in said lifting position said opening (26) of said clamp (24) is facing vertically downwards.

5. The lifting device (1) according to claim 1, **characterized in that** said first and second rotation devices (12) comprise a rotation cam (28) and a rotation lever (30), said rotation cam (28) and said rotation lever (30) being functionally associated to said lifting rail (2) and said wheel holder (8) to cause said first and said second rotation of said wheel holder (8) relative to said lifting rail (2) during the movement of said wheel holder (8) between said delivery level (4) and said handling level (6).

6. The lifting device (1) according to any of claims 1 to 5, **characterized in that** said wheel holder (8) further comprises at a tread supporting section with a self-centering device (14) for centering the first wheel (104) in said wheel holder (8) in a centered manner.

7. The lifting device (1) according to claim 6, **characterized in that** said self-centering device (14) comprises two centering wheels (16) having a decreasing diameter towards their central symmetry plane, said centering wheels (16) being distanced from one another relative to said clamp (24) such that in use, the first wheel (104) is self-centered relative to the clamp (24) of said wheel holder (8).

8. The lifting device (1) according to claim 7, **characterized in that** said two centering wheels (16) are identical and symmetrically arranged relative to said clamp (24).

9. The lifting device (1) according to any of claims 1 to 8, **characterized in that** it comprises a first guiding rail (18) arranged facing said wheel holder (8) such that in use, said first guiding rail (18) receives and guides the second wheel (106) opposite to the first wheel (104) held by said wheel holder (8) during the movement of said bicycle (102) along said lifting rail (2).

10. The lifting device (1) according to any of claim 9, **characterized in that** said first guiding rail (18) comprises an upper main section (22) and a lower tilting end section (20), said tilting end section (20) being tiltable about a tilting axis (32), relative to said main section (22) between
[i] an aligned position in which said tilting end section (20) is aligned with said main section (22) of said first guiding rail (18) and
[ii] an angled position in which said tilting end section (20) is angled relative to said main section (22) of said first guiding rail (18) towards said wheel holder (8),
said tilting end section (20) being functionally associated with said wheel holder (8) to go from the aligned position to the angled position once said wheel holder (8) moving towards said handling level overcomes said tilting axis (32).

11. The lifting device (1) according to claim 10, **characterized in that** said main section of said first guiding rail (18) is parallel to said lifting rail (2).

12. The lifting device (1) according to any of claims 1 to 11, **characterized in that** it further comprises a second guiding rail (34) for receiving at least said first wheel (104), said second guiding rail (34) having a first and a second ends (36, 38), and said second guiding rail (34) being aligned with said wheel holder (8) and having said second end (38) arranged adjacent to in said wheel holder (8) for guiding the first wheel (104) into said wheel holder (8).

13. The lifting device (1) according to claim 12, **characterized in that** said second guiding rail (34) is inclined upwards towards the wheel holder (8).

14. Elevated bicycle handling system (100) for elevated handling of a bicycle, comprising a delivery area arranged at a delivery level (4) and an elevated handling area arranged at a handling level (6) **characterized in that** it comprises a lifting device (1) according to any of previous claims 1 to 13.

## Patentansprüche

1. Hebevorrichtung (1) für ein Fahrradhandhabungssystem zum Bewegen eines Fahrrads (102) zwischen einer Zufuhrhöhe (4) und einer Handhabungshöhe (6), die in Bezug auf die Zufuhrhöhe (4) erhöht ist, wobei die Hebevorrichtung (1) aufweist:
[a] eine Hebeschiene (2), die sich in Längsrichtung erstreckt zwischen
[i] der Zufuhrhöhe (4), und
[ii] der Handhabungshöhe (6),
[b] wobei die Hebeschiene (2) eine Heberichtung (L) definiert,
[c] wobei die Hebevorrichtung (1) ferner einen Radhalter (8) zum Halten eines ersten Rades (104) des Fahrrads (102) aufweist,
[d] wobei der Radhalter (8) auf der Hebeschiene (2) entlang der Heberichtung (L) beweglich montiert ist zwischen
[i] der Zufuhrhöhe (4), und
[ii] der Handhabungshöhe (6),
[e] der Radhalter (8) ferner relativ zur Hebeschiene (2) um eine sich senkrecht zur Heberichtung (L) erstreckende Drehachse (R) drehbar montiert ist, zwischen
[i] einer Zufuhrposition, in der der Radhalter (8) in der Zufuhrhöhe (4) nach oben gewandt ist, um das erste Rad (104) aufzunehmen, und
[ii] einer Hebeposition, in der der Radhalter (8) in der Handhabungshöhe (6) nach unten gewandt ist, und
[f] die Bewegung des Radhalters (8) entlang der Heberichtung (L) und die Drehbewegung des Radhalters (8) funktionell miteinander zugeordnet sind, um die Drehbewegung des Radhalters (8) zwischen der Zufuhr- und der Hebeposition während der Bewegung des Radhalters (8) zwischen der Zufuhr- und der Handhabungshöhe (4, 6) zu veranlassen,
**dadurch gekennzeichnet, dass**
[g] die Hebeschiene (2) und der Radhalter (8) eine erste Drehvorrichtung (10) und eine zweite Drehvorrichtung (12) aufweisen, wobei die erste Drehvorrichtung (10) in der Nähe der Zufuhrhöhe (4) und entfernt von der Handhabungshöhe (6) angeordnet ist, und die zweite Drehvorrichtung (12) in der Nähe der Handhabungshöhe (6) und entfernt von der Zufuhrhöhe (4) angeordnet ist, so dass, wenn der Radhalter (8) zwischen der Zufuhrhöhe (4) und der Handhabungshöhe (6) bewegt wird, die erste Drehvorrichtung (10) eine erste Drehbewegung des Radhalters (8) in Bezug auf die Hebeschiene (2) zwischen der Zufuhrposition und einer Zwischenposition veranlasst und die zweite Drehvorrichtung (12) eine zweite Drehbewegung des Radhalters (8) in Bezug auf die Hebeschiene (2) zwischen der Zwischenposition und der Hebeposition veranlasst.

2. Hebevorrichtung (1) nach Anspruch 1, **dadurch gekennzeichnet, dass** die Hebeschiene (2) gerade ist und in einer aufrechten Position angeordnet ist.

3. Hebevorrichtung (1) nach Anspruch 1 oder 2, **dadurch gekennzeichnet, dass** der Radhalter (8) eine Klemme (24) mit einer Öffnung (26) aufweist, das erste Rad (104) einen Reifen und eine Felge aufweist, und die Klemme (24) dafür konfiguriert ist, das erste Rad (104) durch den Reifen (104A) und/oder die Felge (104B) zu halten.

4. Hebevorrichtung (1) nach Anspruch 3, **dadurch gekennzeichnet, dass** in der Zufuhrposition die Öffnung (26) der Klemme (24) vertikal nach oben gewandt ist, während in der Hebeposition die Öffnung (26) der Klemme (24) vertikal nach unten gewandt ist.

5. Hebevorrichtung (1) nach Anspruch 1, **dadurch gekennzeichnet, dass** die erste und die zweite Drehvorrichtung (12) eine Rotationsnocke (28) und einen Rotationshebel (30) aufweisen, wobei die Rotationsnocke (28) und der Rotationshebel (30) der Hebeschiene (2) und dem Radhalter (8) funktionell zugeordnet sind, um während der Bewegung des Radhalters (8) zwischen der Zufuhrhöhe (4) und der Handhabungshöhe (6) die erste und die zweite Drehbewegung des Radhalters (8) in Bezug auf die Hebeschiene (2) zu veranlassen.

6. Hebevorrichtung (1) nach einem der Ansprüche 1 bis 5, **dadurch gekennzeichnet, dass** der Radhalter (8) ferner einen Laufflächenstützabschnitt mit einer Selbstzentriereinrichtung (14) zum Zentrieren des ersten Rades (104) im Radhalter (8) auf eine zentrierte Weise aufweist.

7. Hebevorrichtung (1) nach Anspruch 6, **dadurch gekennzeichnet, dass** die Selbstzentriervorrichtung (14) zwei Zentrierräder (16) mit einem zu ihrer Mittensymmetrieebene hin abnehmenden Durchmesser aufweist, wobei die Zentrierräder (16) in Bezug auf die Klemme (24) voneinander beabstandet sind, so dass im Gebrauch das erste Rad (104) in Bezug auf die Klemme (24) des Radhalters (8) selbstzentriert ist.

8. Hebevorrichtung (1) nach Anspruch 7, **dadurch gekennzeichnet, dass** die beiden Zentrierräder (16) identisch und in Bezug auf die Klemme (24) symmetrisch angeordnet sind.

9. Hebevorrichtung (1) nach einem der Ansprüche 1 bis 8, **dadurch gekennzeichnet, dass** sie eine erste Führungsschiene (18) aufweist, die dem Radhalter (8) zugewandt ist, so dass im Gebrauch die erste Führungsschiene (18) während der Bewegung des Fahrrads (102) entlang der Hebeschiene (2) das zweite Rad (106) gegenüber dem durch den Radhalter (8) gehaltenen ersten Rad (104) aufnimmt und führt.

10. Hebevorrichtung (1) nach Anspruch 9, **dadurch gekennzeichnet, dass** die erste Führungsschiene (18) einen oberen Hauptabschnitt (22) und einen unteren kippbaren Endabschnitt (20) aufweist, wobei der kippbare Endabschnitt (20) um eine Kippachse (32) relativ zum Hauptabschnitt (22) kippbar ist zwischen
[i] einer ausgerichteten Position, in der der kippbare Endabschnitt (20) mit dem Hauptabschnitt (22) der ersten Führungsschiene (18) ausgerichtet ist, und
[ii] einer abgewinkelten Position, in der der kippbare Endabschnitt (20) relativ zum Hauptabschnitt (22) der ersten Führungsschiene (18) in Richtung zum Radhalter (8) abgewinkelt ist,
wobei der kippbare Endabschnitt (20) dem Radhalter (8) funktionell zugeordnet ist, so dass er von der ausgerichteten Position zur abgewinkelten Position übergeht, sobald der Radhalter (8), der sich in Richtung zur Handhabungshöhe bewegt, die Kippachse (32) überwindet.

11. Hebevorrichtung (1) nach Anspruch 10, **dadurch gekennzeichnet, dass** der Hauptabschnitt der ersten Führungsschiene (18) sich parallel zur Hebeschiene (2) erstreckt.

12. Hebevorrichtung (1) nach einem der Ansprüche 1 bis 11, **dadurch gekennzeichnet, dass** sie ferner eine zweite Führungsschiene (34) zum Aufnehmen zumindest des ersten Rades (104) aufweist, die zweite Führungsschiene (34) ein erstes und ein zweites Ende (36, 38) aufweist, und die zweite Führungsschiene (34) mit dem Radhalter (8) ausgerichtet ist und das in der Nähe des Radhalters (8) angeordnete zweite Ende (38) zum Führen des ersten Rades (104) in den Radhalter (8) aufweist.

13. Hebevorrichtung (1) nach Anspruch 12, **dadurch gekennzeichnet, dass** die zweite Führungsschiene (34) nach oben zum Radhalter (8) hin geneigt ist.

14. Erhöhtes Fahrradhandhabungssystem (100) zum erhöhten Handhaben eines Fahrrads, mit einem auf einer Zufuhrhöhe (4) angeordneten Zufuhrbereich und einem auf einer Handhabungshöhe (6) angeordneten erhöhten Handhabungsbereich, **dadurch gekennzeichnet, dass** das System eine Hebevorrichtung (1) nach einem der vorhergehenden Ansprüche 1 bis 13 aufweist.

## Revendications

1. Dispositif de levage (1) pour un système de manipulation de vélos, pour déplacer un vélo (102) entre un niveau de livraison (4) et un niveau de manipulation (6), surélevé par rapport audit niveau de livraison (4), ledit dispositif de levage (1) comprenant :
[a] un rail de levage (2) s'étendant longitudinalement entre
[i] ledit niveau de livraison (4) et
[ii] ledit niveau de manipulation (6),
[b] ledit rail de levage (2) définissant une direction de levage (L),
[c] le dispositif de levage (1) comprenant en outre un support de roue (8) pour maintenir une première roue (104) dudit vélo (102),
[d] ledit support de roue (8) étant monté mobile sur ledit rail de levage (2) le long de ladite direction de levage (L) entre
[i] ledit niveau de livraison (4) et
[ii] ledit niveau de manipulation (6),
[e] ledit support de roue (8) est en outre monté en rotation par rapport audit rail de levage (2) autour d'un axe de rotation (R) perpendiculaire à ladite direction de levage (L), entre
[i] une position de livraison dans laquelle ledit support de roue (8) est tourné vers le haut audit niveau de livraison (4) pour recevoir ladite première roue (104), et
[ii] une position de levage dans laquelle ledit support de roue (8) est tourné vers le bas audit niveau de manipulation (6), et
[f] le déplacement dudit support de roue (8) le long de ladite direction de levage (L) et la rotation dudit support de roue (8) sont fonctionnellement associés l'un à l'autre pour provoquer la rotation dudit support de roue (8) entre lesdites positions de livraison et de levage lors du déplacement dudit support de roue (8) entre lesdits niveaux de livraison et de manipulation (4, 6),
**caractérisé en ce que**
[g] ledit rail de levage (2) et ledit support de roue (8) comprennent un premier dispositif de rotation (10) et un second dispositif de rotation (12), ledit premier dispositif de rotation (10) étant situé à proximité du niveau de livraison (4) et à distance dudit niveau de manipulation (6), et ledit second dispositif de rotation (12) étant situé à proximité dudit niveau de manipulation (6) et à distance dudit niveau de livraison (4), de sorte que lorsque ledit support de roue (8) est déplacé entre ledit niveau de livraison (4) et ledit niveau de manipulation (4), ledit premier dispositif de rotation (10) provoque une première rotation dudit support de roue (8) par rapport audit rail de levage (2) entre ladite position de livraison et une position intermédiaire et ledit second dispositif de rotation (12) provoque une seconde rotation dudit support de roue (8) par rapport audit rail de levage (2) entre ladite position intermédiaire et ladite position de levage.

2. Dispositif de levage (1) selon la revendication 1, **caractérisé en ce que** ledit rail de levage (2) est droit et est agencé en position verticale.

3. Dispositif de levage (1) selon la revendication 1 ou 2, **caractérisé en ce que** ledit support de roue (8) comprend une pince (24) avec une ouverture (26), ladite première roue (104) comprenant un pneu et une jante, et **en ce que** ladite pince (24) est configurée pour maintenir ladite première roue (104) par ledit pneu (104A) et/ou ladite jante (104B).

4. Dispositif de levage (1) selon la revendication 3, **caractérisé en ce que** dans ladite position de livraison ladite ouverture (26) de ladite pince (24) est tournée verticalement vers le haut, tandis que dans ladite position de levage ladite ouverture (26) de ladite pince (24) est tournée verticalement vers le bas.

5. Dispositif de levage (1) selon la revendication 1, **caractérisé en ce que** lesdits premier et second dispositifs de rotation (12) comprennent une came de rotation (28) et un levier de rotation (30), ladite came de rotation (28) et ledit levier de rotation (30) étant fonctionnellement associés audit rail de levage (2) et audit support de roue (8) pour provoquer ladite première et ladite seconde rotation dudit support de roue (8) par rapport audit rail de levage (2) pendant le déplacement dudit support de roue (8) entre ledit niveau de livraison (4) et ledit niveau de manipulation (6).

6. Dispositif de levage (1) selon l'une des revendications 1 à 5, **caractérisé en ce que** ledit support de roue (8) comprend en outre au niveau d'une section de support de bande de roulement un dispositif d'auto-centrage (14) pour centrer la première roue (104) dans ledit support de roue (8) de manière centrée.

7. Dispositif de levage (1) selon la revendication 6, **caractérisé en ce que** ledit dispositif d'auto-centrage (14) comprend deux roues de centrage (16) présentant un diamètre décroissant vers leur plan de symétrie central, lesdites roues de centrage (16) étant espacées l'une de l'autre par rapport à ladite pince (24) de sorte qu'en cours d'utilisation, la première roue (104) est autocentrée par rapport à la pince (24) dudit support de roue (8).

8. Dispositif de levage (1) selon la revendication 7, **caractérisé en ce que** lesdites deux roues de centrage (16) sont identiques et agencées symétriquement par rapport à ladite pince (24).

9. Dispositif de levage (1) selon l'une des revendications 1 à 8, **caractérisé en ce qu'**il comprend un premier rail de guidage (18) agencé en regard dudit support de roue (8) de sorte qu'en cours utilisation, ledit premier rail de guidage (18) reçoit et guide la seconde roue (106) opposée à la première roue (104) maintenue par ledit support de roue (8) lors du déplacement dudit vélo (102) le long dudit rail de levage (2).

10. Dispositif de levage (1) selon la revendication 9, **caractérisé en ce que** ledit premier rail de guidage (18) comprend une section principale supérieure (22) et une section d'extrémité inclinable inférieure (20), ladite section d'extrémité inclinable (20) pouvant s'incliner autour d'un axe d'inclinaison (32), par rapport à ladite section principale (22) entre
[i] une position alignée dans laquelle ladite section d'extrémité inclinable (20) est alignée avec ladite section principale (22) dudit premier rail de guidage (18) et
[ii] une position inclinée dans laquelle ladite section d'extrémité inclinable (20) est inclinée par rapport à ladite section principale (22) dudit premier rail de guidage (18) vers ledit support de roue (8),
ladite section d'extrémité inclinable (20) étant fonctionnellement associée audit support de roue (8) pour passer de la position alignée à la position inclinée une fois que ledit support de roue (8) se déplaçant vers ledit niveau de manipulation dépasse ledit axe d'inclinaison (32).

11. Dispositif de levage (1) selon la revendication 10, **caractérisé en ce que** ladite section principale dudit premier rail de guidage (18) est parallèle audit rail de levage (2).

12. Dispositif de levage (1) selon l'une des revendications 1 à 11, **caractérisé en ce qu'**il comprend en outre un second rail de guidage (34) pour recevoir au moins ladite première roue (104), ledit second rail de guidage (34) ayant des première et seconde extrémités (36, 38), et ledit second rail de guidage (34) étant aligné avec ledit support de roue (8) et ayant ladite seconde extrémité (38) agencée de manière adjacente à dans ledit support de roue (8) pour guider la première roue (104) dans ledit support de roue (8).

13. Dispositif de levage (1) selon la revendication 12, **caractérisé en ce que** ledit second rail de guidage (34) est incliné vers le haut en direction du support de roue (8).

14. Système de manipulation de vélos surélevé (100) pour la manipulation surélevée d'un vélo, comprenant une zone de livraison agencée à un niveau de livraison (4) et une zone de manipulation surélevée agencée à un niveau de manipulation (6) **caractérisé en ce qu'**il comprend un dispositif de levage (1) selon l'une des revendications précédentes 1 à 13.
